# EUROPEAN PATENT APPLICATION

(11) **EP 4 806 757 A1**
(43) Date of publication of application: **16.09.2026**
(21) Application number: 24888466.0
(22) Date of filing: 11.10.2024
(51) Int. Cl.: B61L 25/02, G01C 3/06

(54) **DISTANCE MEASUREMENT SYSTEM AND VEHICLE EQUIPPED WITH SAME**

(30) Priority: 10.11.2023 JP 2023192508
(71) Applicant: Hitachi, Ltd., Tokyo 100-8280 (JP)
(72) Inventor: IMAGAWA, Seiji, Tokyo 100-8280 (JP)
(74) Representative: MERH-IP Matias Erny Reichl Hoffmann Patentanwälte PartG mbB
(86) International application number: PCT/JP2024/036500
(87) International publication number: WO 2025/100168

(57) **Abstract**

This invention is to provide a technique for accurately detecting the accuracy of a distance measurement system without previously acquiring a binocular image, which is the reference of correction. A typical one of the distance measurement system according to the present invention includes: a rail irregularity information generation unit that detects the irregularity of a rail and around the rail; a first rail position detection unit that outputs a rail position on the basis of the output of the rail irregularity information generation unit; a rail width calculation unit that outputs rail width information on the basis of the output of the first rail position detection unit; a first rail distance calculation unit that outputs a first rail distance on the basis of the rail width information; a second rail distance calculation unit that outputs a second rail distance on the basis of the output of the distance calculation unit; a distance error calculation unit that compares the first rail distance and the second rail distance to output an error; and a correction amount calculation unit that outputs the correction amount of the output of the distance calculation unit on the basis of the output of the distance error calculation unit.

## Description

### Technical Field

This invention relates to a distance measurement system and a vehicle equipped with the same.

### Background Art

From the viewpoint of ensuring safety, a moving body is required to accurately confirm a self position and to reliably detect an obstacle. Thus, a technique for accurately performing a distance measurement in an advancing direction of the moving body has been important. As a method for such distance measurement, a stereo camera has been conventionally used. However, in the stereo camera, there has been known that when the stereo camera is installed, various factors such as change with time due to vibration and the like during traveling cause an optical axis deviation and the like of the stereo camera, thereby lowering the accuracy of the distance measurement. To cope with such lowered accuracy, a technique for correcting a distance measurement system to thereby improve the accuracy has also been studied.

For example, Patent Literature 1 discloses a technique of "a forward monitoring device includes an image input unit that has a stereo camera that images the advancing direction of a train, and to which a before-travel binocular image captured by the stereo camera before the traveling of the train and a during-travel binocular image captured by the stereo camera during the traveling of the train are inputted, a landmark detection unit that detects a plurality of landmarks in the train surroundings from the before-travel binocular image, and detects one landmark in the train surroundings from the during-travel binocular image, and a calibration unit that performs, on the before-travel binocular image, a first calibration calculation on the basis of the position information of the plurality of landmarks in the train surroundings, and on the during-travel binocular image, a second calibration calculation on the basis of the position information of the one landmark in the train surroundings. The calibration unit compares the estimated position information of the one landmark in the train surroundings calculated from the during-travel binocular image corrected on the basis of the first calibration calculation performed before the traveling of the train, and reference position information, which is the reference position of the one landmark in the train surroundings. If the amount by which the estimated position information deviates from the reference position information is a threshold value or more, the calibration unit performs the correction of the during-travel binocular image on the basis of the second calibration calculation.".

### Citation List

### Patent Literature

Patent Literature 1: WO 2021/044564

### Summary of Invention

### Technical Problem

However, in Patent Literature 1, to perform the calibration of the forward monitoring device, the binocular image of the landmark, which is the reference of the correction is required to be previously acquired, so that the load of the previous preparation is large in performing the calibration. In addition, in the calibration of Patent Literature 1, the correction is relatively performed on the basis of the previously acquired landmark information, so that there is a problem that when the accuracy of the previously acquired landmark information is low, the accuracy of the corrected measurement result also remains low.

Accordingly, the present invention has an object to provide a technique for accurately detecting the accuracy of a distance measurement system without previously acquiring a binocular image, which is the reference of correction.

### Solution to Problem

In order to solve the above problems, a typical one of a distance measurement system according to the present invention includes rail information acquirement units that acquire rail information from a plurality of directions, and a distance calculation unit that performs distance calculation by stereo matching. The distance measurement system includes: a rail irregularity information generation unit that detects the irregularity of a rail and around the rail; a first rail position detection unit that outputs a rail position on the basis of the output of the rail irregularity information generation unit; a rail width calculation unit that outputs rail width information on the basis of the output of the first rail position detection unit; a first rail distance calculation unit that outputs a first rail distance on the basis of the rail width information; a second rail distance calculation unit that outputs a second rail distance on the basis of the output of the distance calculation unit; a distance error calculation unit that compares the first rail distance and the second rail distance to output an error; and a correction amount calculation unit that outputs the correction amount of the output of the distance calculation unit on the basis of the output of the distance error calculation unit.

### Advantageous Effects of Invention

According to the present invention, it is possible to provide a technique for accurately detecting the accuracy of a distance measurement system without previously acquiring a binocular image, which is the reference of correction.

Objects, configurations, and effects other than the above will be apparent from the description of the following embodiments.

### Brief Description of Drawings

Fig. 1 is an outline diagram illustrating a distance measurement system according to a first embodiment.
Fig. 2 is a diagram schematically illustrating rail irregularity information generated by a rail irregularity information generation unit.
Fig. 3 is a graph in which four rows of Fig. 2 are extracted, and the vertical axis is represented as a disparity value.
Fig. 4 is a diagram in which Fig. 2 is normalized to be linearly approximated.
Fig. 5 is a diagram in which the column address of each row of Fig. 4 is quantitatively shifted to be rearranged.
Fig. 6 is a graph in which a region Y of Fig. 5 is extracted.
Fig. 7 is a cross-sectional view in the disparity value direction of a region X of Fig. 3.
Fig. 8 is a diagram illustrating the matter considered by a reliability evaluation unit.
Fig. 9 is a diagram illustrating the relationship between the distance measurement system mounted on a vehicle and a track or a road surface.
Fig. 10 is a flowchart illustrating the process in the distance measurement system.
Fig. 11 is an outline diagram illustrating the distance measurement system according to a second embodiment.

### Description of Embodiments

Hereinafter, embodiments of the present disclosure will be described with reference to the accompanying drawings. It should be noted that the present invention is not limited by the embodiments. In addition, in the description of the drawings, the same portions are indicated by the same reference numerals.

When there are a plurality of components having the same or similar functions, the same reference numerals may be indicated by different subscripts for description. In addition, when these plurality of components are not required to be discriminated, the subscripts may be omitted for description.

In addition, the terms of "first", "second", "third", and the like may be used for describing various elements or components in the present disclosure, but it will be understood that these elements or components should not be limited by these terms. These terms are used only for discriminating the certain element or component from other elements or components. Therefore, a first element or component discussed below can also be called a second element or component without departing from the teaching of the concept of the present invention.

To facilitate the understanding of the invention, the position, size, shape, range, and the like of each component represented in the drawings may not represent the actual position, size, shape, range, and the like. Thus, the present invention is not necessarily limited to the position, size, shape, range, and the like disclosed in the drawings.

### First Embodiment

In a first embodiment, an example of a distance measurement system equipped with a rail information acquirement unit will be described.

In addition, the first embodiment will be described by using, as the rail information acquirement unit, a stereo camera. First, each function block will be described.

### (Configuration)

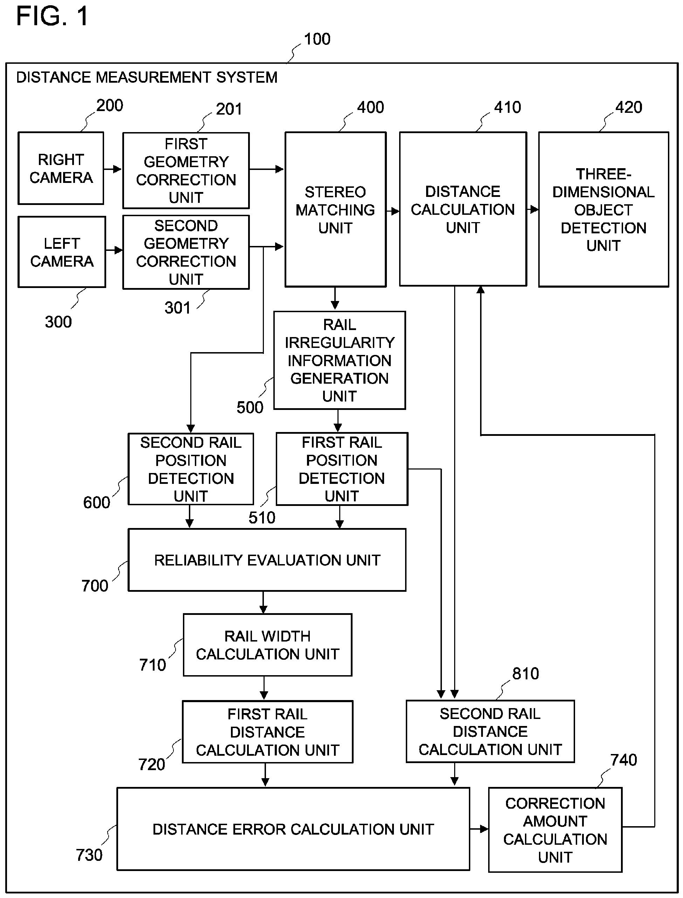

Fig. 1 is a diagram illustrating the outline configuration of a distance measurement system 100 equipped with the rail information acquirement unit.

The distance measurement system 100 includes a right camera 200, a left camera 300, a first geometry correction unit 201, a second geometry correction unit 301, a stereo matching unit 400, a distance calculation unit 410, a three-dimensional object detection unit 420, a rail irregularity information generation unit 500, a first rail position detection unit 510, a second rail position detection unit 600, a reliability evaluation unit 700, a rail width calculation unit 710, a first rail distance calculation unit 720, a distance error calculation unit 730, a correction amount calculation unit 740, and a second rail distance calculation unit 810.

With this, the distance measurement system 100 measures the distance between a vehicle equipped with the distance measurement system 100 and a rail in the advancing path.

In addition, in first embodiment, the stereo camera is used as the measurement sensor that is the rail information acquirement unit, but other distance measurement sensors may be used. For example, an LiDAR (light detection and ranging) may be used.

The stereo camera includes two imaging units (the right camera 200, and the left camera 300), and generates images captured in synchronization from different viewpoints.

That is, the stereo camera functions as the rail information acquirement unit that acquires the rail information of the rail acquired at the same time from two difference directions.

In addition, the right camera 200 configures, as one of the imaging units of the stereo camera, a right side camera, and likewise, the left camera 300 configures, as the other of the imaging units of the stereo camera, a left side camera.

It should be noted that in the first embodiment, the stereo camera is configured to include the two imaging units, but may be configured to include different numbers of imaging units.

The right camera 200 transmits the captured image to the connection to the first geometry correction unit 201. Likewise, the left camera 300 transmits the captured image to the connection to the second geometry correction unit 301.

It should be noted that while the left camera 300 and the right camera 200 configure the stereo camera, the left camera 300 and the right camera 200 can also be configured to function also as a monocular camera by the switching of a switch and the like. Such the configuration illustrates one example, and the embodiment is not limited to this. The sensor for the stereo camera and the sensor for the monocular camera may be configured to be separately provided.

The first geometry correction unit 201 corrects the image captured by the right camera 200, and transmits the corrected image to the stereo matching unit 400.

Specifically, first, the first geometry correction unit 201 performs distortion correction on the image captured by the right camera 200, thereby removing the distortion of the image.

The image captured by the camera is typically radially distorted from the center of the image due to lens distortion, and likewise, the distortion is caused also for the image captured by the right camera 200, so that this is for preventing the generation of the disparity image by the stereo matching unit 400 described later from being affected due to the distortion.

Next, the first geometry correction unit 201 performs rectification such that the corresponding points of the image captured by the right camera 200 and the image captured by the left camera 300 have the same row coordinate.

When in the present embodiment, the images captured by the two imaging units having different angles and distances are overlapped with each other, a slight shift is caused, so that this is for reducing the load in the stereo matching unit 400 described later by previously performing the rectification.

The second geometry correction unit 301 corrects the image captured by the left camera 300, like the first geometry correction unit 201, and transmits the corrected image to the stereo matching unit 400.

The stereo matching unit 400 generates the disparity image from the images corrected by the first geometry correction unit 201 and the second geometry correction unit 301.

Next, the stereo matching unit 400 generates the disparity image including the disparity value from the calculated disparity.

The distance calculation unit 410 generates a distance image from the disparity image generated by the stereo matching unit 400.

Specifically, the distance calculation unit 410 converts the disparity value of each pixel included in the disparity image to the distance on the basis of a 2D-3D conversion parameter, generates the distance image, and transmits the distance image to the three-dimensional object detection unit 420.

Further, the distance calculation unit 410 may generate the distance image in consideration of a correction amount calculated by the correction amount calculation unit 740, as described later.

The three-dimensional object detection unit 420 detects a three-dimensional object, for example, an obstacle, from the distance image.

Specifically, the three-dimensional object detection unit 420 performs noise removal and grouping from the three-dimensional coordinate including the distance on the basis of the distance information included in the distance image. With this, the three-dimensional object detection unit 420 detects the three-dimensional object that is the obstacle for the traveling train.

The rail irregularity information generation unit 500 extracts the rail and the area around the rail from the disparity image generated by the stereo matching unit 400, and generates rail irregularity information based on the disparity value.

At this time, the generated rail irregularity information is transmitted to the first rail position detection unit 510.

The first rail position detection unit 510 detects a rail position on the basis of the detected rail irregularity. At this time, the detected rail position is a first rail position.

The second rail position detection unit 600 detects a rail position from the image captured by the left camera 300. At this time, the detected rail position is a second rail position.

Specifically, the second rail position detection unit 600 may detect the second rail position from the image captured by the left camera 300 by machine learning.

In addition, in the first embodiment, when the stereo camera generates the disparity image, the image captured by the left camera 300 is a reference image, so that the rail position is detected from the image captured by the left camera 300, but when the reference image is captured by the right camera 200, the rail position is desirably detected from the image captured by the right camera 200 on the same side.

In addition, the second rail position detection unit 600 may detect the rail position with the disparity image as a mere image, and may search for the change in color and contrast included in the image, thereby to detect the second rail position.

The reliability evaluation unit 700 calculates, as a reliability evaluation value, the correctness of the detected rail position, and when the reliability evaluation value is a predetermined value or more, judges that the detected rail position is reliable.

The rail width calculation unit 710 calculates a rail width on the basis of the reliable rail position information transmitted from the reliability evaluation unit 700.

That is, the rail width calculation unit 710 calculates, as the number of pixels, the disparity image or the rail width on the image, on the basis of the reliable rail position information transmitted from the reliability evaluation unit 700.

Here, the rail width is decided for each route on which the train travels, and the value concerned can be previously acquired. Thus, when there are the information on the difference between the column coordinate of the left side rail and the column coordinate of the right side rail, the information on the focal length, and the information on the standardized rail width, the distance to the targeted rail portion can be calculated.

In addition, without previously acquiring, as the value, the rail width, the type of the gauge of the railroad track may be acquired to calculate the value of the rail width from the type of the gauge. For example, when the acquired gauge type is a standard gauge, the rail width may be 1435 mm, and when the acquired gauge type is a narrow gauge, the rail width may be 1067 mm. Further, the rail width may be acquired by using the information acquired by the maintenance operation of the route concerned.

It should be noted that the rail width calculation unit may set a weight to at least one of the rail position by the first rail position detection unit 510 and the rail position by the second rail position detection unit 600, which are outputted by the reliability evaluation unit 700, thereby calculating the rail width on the basis of the rail position having high reliability.

The first rail distance calculation unit 720 calculates a rail distance from the stereo camera to the rail on the basis of the rail width based on the reliable rail position and the focal length of the stereo camera. At this time, the calculated rail distance is a first rail distance.

In addition, the rail width calculation unit 710 outputs the rail width only in the case where the reliable rail position is outputted from the reliability evaluation unit 700. Thus, the rail width calculation unit 710 does not output the rail width at all times, and the rail width outputted becomes discontinuous data.

Thus, the output of the first rail distance calculation unit 720 to which the rail width is inputted is also discontinuous, and becomes non-continuous information.

The second rail distance calculation unit 810 calculates the rail distance from the stereo camera to the rail by using the disparity information.

Specifically, the second rail distance calculation unit 810 acquires, from the first rail position detection unit 510, the timing information in which the first rail position is outputted, and according to this timing, acquires the rail distance information based on the distance image from the distance calculation unit 410, and outputs the rail distance information to the distance error calculation unit 730.

That is, the second rail distance calculation unit 810 continuously calculates a second rail distance, and transmits the second rail distance to the distance error calculation unit 730.

The distance error calculation unit 730 calculates the difference between the first rail distance and the second rail distance.

The correction amount calculation unit 740 calculates a distance correction value on the basis of the distance error information calculated by the distance error calculation unit 730.

The calculated distance correction value is transmitted to the distance calculation unit 410, and is used as a correction value for the case where the distance calculation unit 410 calculates the distance image from the disparity value.

### (The detail of the rail irregularity information)

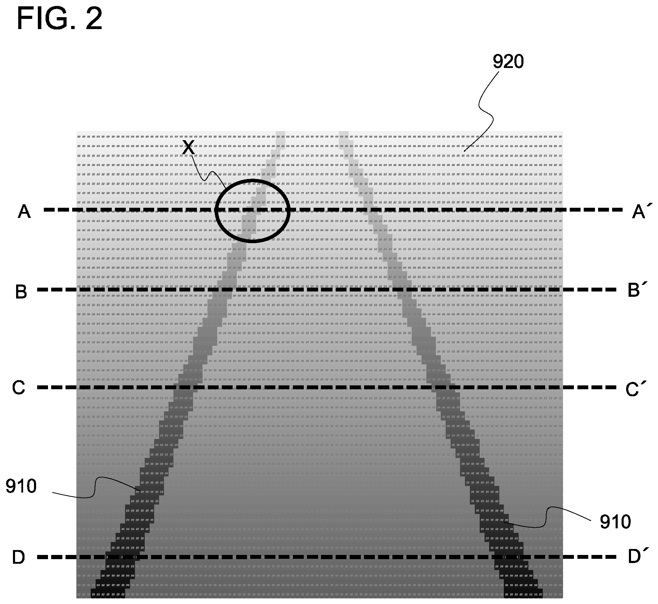

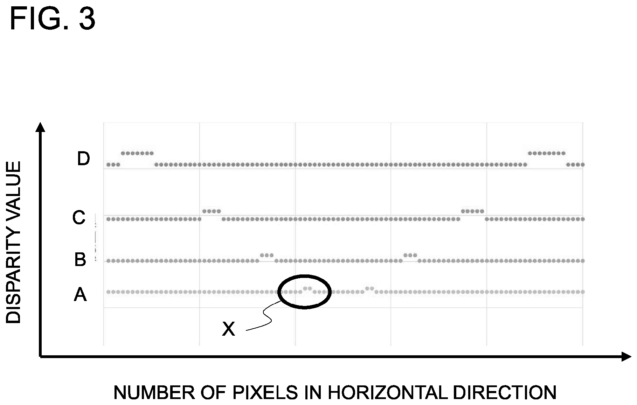

Next, the rail irregularity information will be described with reference to Figs. 2 and 3.

Fig. 2 is a diagram schematically illustrating the rail irregularity information generated by the rail irregularity information generation unit 500. In addition, Fig. 3 is a graph in which four rows (the A-A' row, the B-B' row, the C-C' row, and the D-D' row) of Fig. 2 are extracted, and the vertical axis is represented as the disparity value.

The rail irregularity information generation unit 500 generates, as the rail irregularity information, a drawing illustrating, by the disparity, the distance from the stereo camera mounted at the height of a few meters from the road surface.

For example, Fig. 2 is a diagram generated as the rail irregularity information, and illustrates the disparity image for the case where the stereo camera is mounted on the vehicle at the height of 0.5 m from the ground.

The drawing generated as the rail irregularity information is the disparity image that is represented in darker color as the disparity value is larger, and is represented in lighter color as the disparity value is smaller. Since the disparity is larger toward the place in the front side, the disparity image is represented in color closer to black toward the area on the lower side of the drawing, which is closer area.

In Fig. 2, the upper surface of a rail 910 is at the position higher than a road surface 920, and in the A-A' row indicated by the chain line in Fig. 2, the rail 910 is represented to stand out in color closer to black than the road surface 920.

In addition, at this time, in Fig. 3 in which the horizontal axis represents the number of pixels in the horizontal direction, the vertical axis represents the disparity value, and the four rows (the A-A' row, the B-B' row, the C-C' row, and the D-D' row) of Fig. 2 are extracted, the portion indicated by a region X in Fig. 2 is represented to be changed in the disparity value, as indicated by the region X of Fig. 3.

### (The detail of the detection of the first rail position)

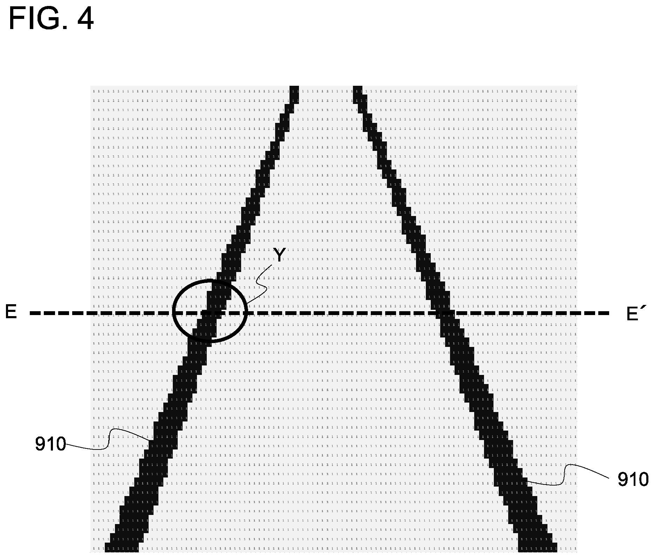

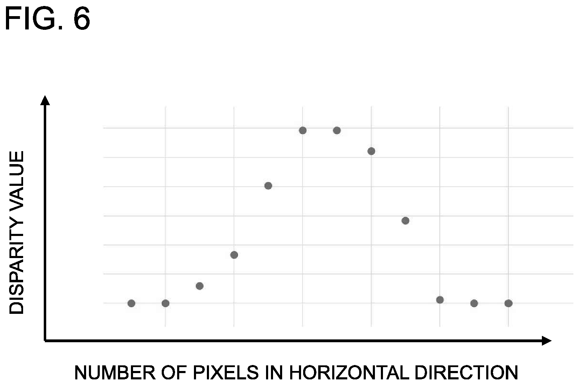

Next, the detection of the first rail position will be described with reference to Figs. 4 and 6.

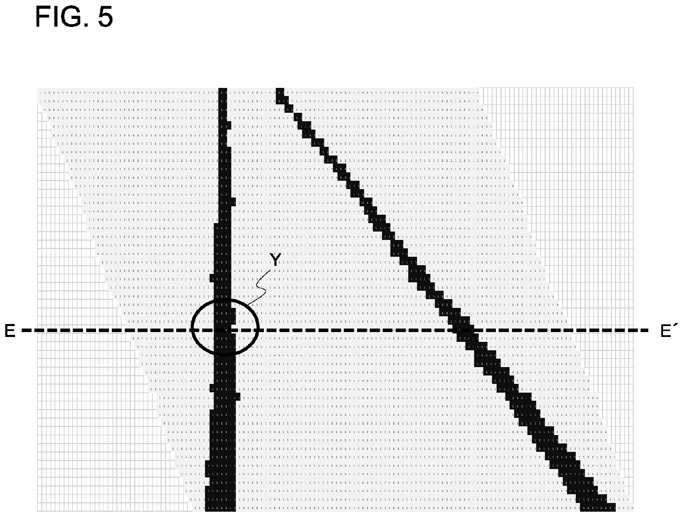

Fig. 4 is a diagram in which Fig. 2 is normalized to be linearly approximated. In addition, Fig. 5 is a diagram in which the column address of each row of Fig. 4 is quantitatively shifted to be rearranged.

Further, Fig. 6 is a graph in which a region Y of Fig. 5 is enlarged to be denoted as the disparity value for each pixel.

The first rail position detection unit 510 detects the edges of the outside and the inside of the rail (the edges of the rail upper surface) on the basis of the rail irregularity information, thereby detecting the first rail position. In the detection using the disparity, compared to the detection accuracy of the disparity value itself, the position where the disparity is changed can be detected with extremely high accuracy.

Thus, by removing noise from the rail irregularity information as illustrated in Fig. 2, the first rail position can be detected with high accuracy.

Specifically, the rail irregularity information generation unit 500 uses the edge coordinates of the different rows, and as illustrated in Fig. 4, normalizes the disparity value of each pixel by the road surface disparity of each row to linearly approximate the normalized disparity value, thereby generating the rail irregularity information.

That is, the road surface disparity is calculated from the disparity image, the road surface disparity is subtracted from the disparity value of each pixel of the disparity image, the general position of the rail is designated from the continuous pixel group having the disparity value that is positive or a predetermined value or more, and the inside edge of the rail or the outside edge of the rail is detected from the continuous pixels in which the disparity value around the rail general position concerned becomes negative or the predetermined value or less is detected.

With this, the threshold value of the edge can be constant, and while the load of the detection of the first rail position is lowered by the first rail position detection unit 510, the detection accuracy can be improved.

In addition, as another method for improving the detection accuracy, the rail irregularity information generation unit 500 may quantitatively shift and rearrange the column address of each row such that the rail is aligned in the vertical direction on the disparity image, as illustrated in Fig. 5.

With this, the disparity value can be added or averaged in the column direction.

For example, even when the disparity value does not indicate the irregularity in the region Y of Fig. 4 in which the E-E' row and the rail 910 cross each other, the averaged rail irregularity is stably indicated, as illustrated in Fig. 6, in the rearranged rail irregularity information, for example, in the region Y of Fig. 5.

With this, when the standard deviation of Fig. 6 is a minimum value, it can be judged that the quantitative value of the shifted column address is correct.

On the other hand, since the reference of the rail width is the width of the inside of the rail, the inside of the rail can also be detected as the rail position.

It should be noted that the rail edge position in the disparity image and the rail edge position of the image after the geometry correction may not match. In such the case, consideration in which, for example, the rail irregularity information generation unit 500 performs the correction according to the block size for the case where the stereo matching unit 400 performs the stereo matching is required.

### (The detail of the calculation of the reliability evaluation value)

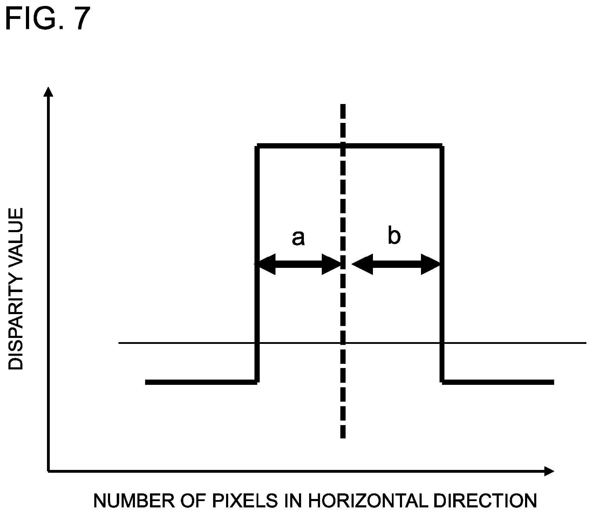

Next, the detail of the calculation of the reliability evaluation value will be described with reference to Fig. 7.

Fig. 7 is a graph in which the first rail position based on the rail irregularity detected by the first rail position detection unit 510 and the second rail position detected by the second rail position detection unit 600 are overlapped to be displayed. In Fig. 7, the horizontal axis indicates the number of pixels in the horizontal direction, and the vertical axis indicates the disparity value.

In Fig. 7, the first rail position based on the rail irregularity detected by the first rail position detection unit 510 is indicated by a solid line, and the second rail position detected by the second rail position detection unit 600 is indicated by a dashed line.

Since the first rail position is based on the irregularity of the rail, in Fig. 7, the first rail position is represented by the irregularity portion in which the disparity value between the outside edge portion and the inside edge portion of the rail is higher than the road surface portion.

With respect to this, the second rail position is detected on the basis of the image captured by the left camera 300, and is indicated by the dashed straight line in Fig. 7.

The reliability evaluation unit 700 compares the first rail position and the second rail position, judges that the reliability evaluation value is the predetermined value or more for the case where the difference between the first rail position and the second rail position, that is, difference between relative positions a and b in Fig. 7, is less than the constant value, and judges that the rail position concerned is the reliable rail position.

Then, the reliability evaluation unit 700 outputs, as the reliable rail position, at least one of the rail position by the first rail position detection unit 510 and the rail position by the second rail detection unit.

When the rail width calculation unit 710 calculates the rail width on the basis of the reliable rail position information, the correction amount calculation unit 740 which will be described later can generate the correction value having the accuracy that can be used by the distance calculation unit 410.

In addition, in Fig. 7, the second rail position is positioned at the position that is less than the constant value from the irregularity portion of the first rail position. However, when the second rail position is not present at the intermediate position between the outside edge and the inside edge at the first rail position, but is present on the outside of the intermediate position, it is judged that the detected rail position is not reliable.

Thus, when at the second rail position, the ratio between the relative position a from the outside of the first rail position and the relative position b from the inside of the first rail position is different by the constant value or more, and also when, for example, the detected rail position is different between the left and right rails, it may be judged that the detected rail position is not reliable.

That is, when the second rail position is positioned at the position that is less than the constant value from the irregularity portion of the first rail position, and when in the left and right rails, the relative position a from the outside of the first rail position at the second rail position and the relative position b from the inside of the first rail position at the second rail position are not different by the constant value or more, the reliability evaluation unit 700 judges that the difference between the first rail position and the second rail position is less than the constant value, that is, the reliability evaluation value is the predetermined value or more.

In addition, the reliability evaluation unit 700 may detect, as the first rail position, the position corresponding to the center between the edge positions on both sides of the inside and the outside of the irregularity portion of the first rail position.

In this case, the difference between the first rail position and the second rail position becomes the difference between the center position concerned and the second rail position.

It should be noted that when in this way, the rail position is the center between the edges on both sides, for the rail width, the width of the insides of the rail or the width of the outsides of the rail can be calculated from the relative interval between the left and right rail positions and the rail upper surface width (the known value). Whether the width of the insides of the rail is the rail width or the width of the outsides of the rail is the rail width should be appropriately selected according to definition information of the rail width.

In addition, when the difference between the first rail position and the second rail position is the constant value or more, that is, the reliability evaluation value is less than the predetermined value, the reliability evaluation unit 700 stops the output of the rail position information, thereby preventing the unreliable rail position information from being transmitted to the rail width calculation unit 710.

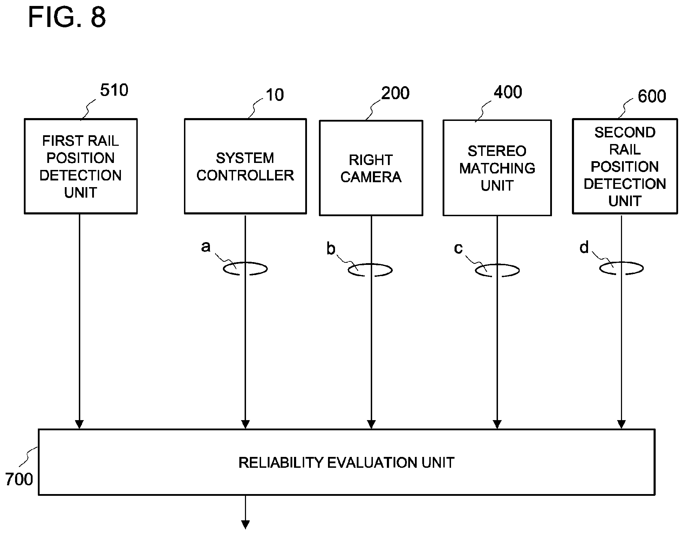

Next, the matter considered by the reliability evaluation unit 700 in calculating the reliability evaluation value will be described with reference to Fig. 8.

Fig. 8 is a diagram illustrating the matter considered by the reliability evaluation unit 700.

To ensure the detection accuracy of the first rail position detection unit 510 and the second rail position detection unit 600, the reliability evaluation unit 700 may judge, in consideration of, for example, weather, time, the tilting of the sun, and the like, whether or not the reliability evaluation value can be calculated.

That is, the reliability evaluation unit 700 is connected with the components other than the first rail position detection unit 510 and the second rail position detection unit 600, for example, a system controller 10, the right camera 200, and the stereo matching unit 400, as illustrated in Fig. 8, and the reliability evaluation value may be calculated in consideration of the information acquired from the components concerned.

For example, the reliability evaluation unit 700 may be connected with the system controller 10 of the distance measurement system 100 to acquire external information a such as the position of the vehicle and time, from the system controller 10, and may use the fact that the external information a is the position and the time suitable for acquiring the rail position information, thereby judging whether or not the reliability evaluation value can be calculated.

In addition, likewise, the reliability evaluation unit 700 acquires a condition b, such as day and night and backlight, from the image acquired from the right camera 200, thereby whether or not the reliability evaluation value can be calculated may be judged.

In addition, likewise, the reliability evaluation unit 700 may acquire the disparity value of the targeted area or an effective disparity rate c of the targeted area (the number of pixels in which the correct disparity with respect to the number of targeted pixels is obtained) from the disparity image acquired from the stereo matching unit 400, thereby increasing the accuracy of the reliability evaluation value.

In addition, likewise, the reliability evaluation unit 700 may calculate the reliability of the second rail position inputted, according to distance information d regarding the rail acquired from the second rail position detection unit 600, thereby considering the reliability concerned.

Further, without calculating the difference between the first rail position and the second rail position, the reliability evaluation unit 700 may decide that, according to the environment, one of the first rail position and the second rail position is outputted as the reliable rail position.

Further, the reliability evaluation unit 700 may change the selection and generation method and the like for the information inputted and the information outputted.

For example, the reliability evaluation unit 700 may judge the linearity of the rail or the flatness (the presence or absence of unevenness) of the road surface from the rail position detected by the first rail position detection unit 510 and the rail position detected by the second rail position detection unit 600, and may calculate the reliability evaluation unit 700 from the flat linear path that is most suitable for acquiring the rail position.

In any of the cases, for example, the reliability evaluation unit 700 may stop the output of the data on the basis of the information inputted to the reliability evaluation unit 700.

Further, the reliability evaluation unit 700 may store, in a storage unit (not illustrated), the calculated reliability evaluation value in association with the first rail position or the second rail position. With this, when the reliability evaluation value is calculated again, the weighting that considers the associated value is enabled.

In addition, through a communication unit connected with an external information processing device, the calculation of the reliability evaluation value may be performed by the external information processing device. With this, the load of the reliability evaluation unit 700 can be lowered.

It should be noted that the information stored in the storage unit is not limited to the reliability evaluation value, the data included in the rail information acquirement unit, the distance calculation unit 410, the rail irregularity information generation unit 500, the first rail position detection unit 510, the reliability evaluation unit 700, the rail width calculation unit 710, the first rail distance calculation unit 720, the second rail distance calculation unit 810, the distance error calculation unit 730, and the correction amount calculation unit 740 may be stored in association with at least one other data, and the data in the storage unit may be transmittable to the outside.

Further, the information processing that is caused to be performed by the external information processing device may be the information processing performed by the distance calculation unit 410, the rail irregularity information generation unit 500, the first rail position detection unit 510, the reliability evaluation unit 700, the rail width calculation unit 710, the first rail distance calculation unit 720, the second rail distance calculation unit 810, the distance error calculation unit 730, and the correction amount calculation unit 740, and the distance measurement may be performed on the basis of the result obtained by the information processing performed by the external information processing device.

### (The detail of the correction of the second rail distance)

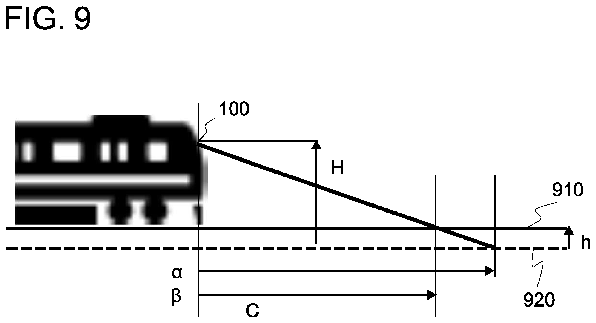

Next, the detail of the calculation of the distance error will be described with reference to Fig. 9.

Fig. 9 is a diagram illustrating the relationship between the distance measurement system 100 mounted on the vehicle and the track or the road surface.

In the second rail distance calculation unit 810, it is difficult to stably acquire the second rail distance since the area of the rail upper surface is narrow. Thus, the second rail distance has the distance from the road surface between the targeted rails.

With this, the second rail distance calculation unit 810 can stably calculate the second rail distance. However, since the first rail distance calculation unit 720 calculates the first rail distance on the basis of the disparity value, the first rail distance calculation unit 720 calculates the distance from the rail upper surface that is closest to the distance measurement system 100.

Thus, when the second rail distance and the first rail distance are compared as-is, the end points measured are different, so that the difference is caused between the distances concerned.

To prevent this, the second rail distance calculation unit 810 is required to correct the second rail distance, and to calculate the distance from the rail upper surface, like the first rail distance.

In Fig. 9, the rail 910 is indicated by a solid line, and the road surface 920 is indicated by a chain line.

At this time, α indicated in Fig. 9 denotes the distance between the distance measurement system 100 mounted on the train and the road surface 920, that is, the second rail distance.

In addition, β indicated in Fig. 9 denotes the distance between the distance measurement system 100 mounted on the train and the upper surface of the rail 910, that is, the first rail distance.

Here, when the output of the second rail distance calculation unit 810 is Zb, the output of the first rail distance calculation unit 720 is Za, the camera height of the road surface reference is H, and the constant rail height is h, the corrected second rail distance Zb' is expressed by the following equation, and the high frequency range is cut by an LPF and the like to obtain the final distance error. $Zb ′ = Zb / H ⋅ \left(H-h\right)$

### (The solution for the failure of the monitoring system of the present disclosure)

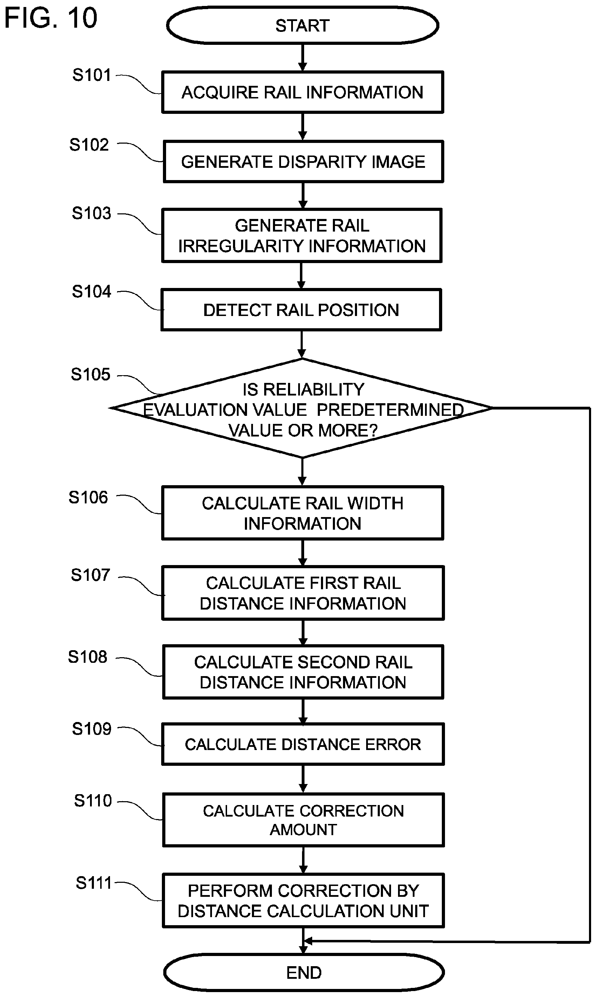

Next, the process in the distance measurement system 100 will be described with reference to Fig. 10.

Fig. 10 is a flowchart illustrating the process in the distance measurement system 100.

In step S101, the stereo matching unit 400 performs imaging by the right camera 200 to acquire the image corrected by the first geometry correction unit 201, and performs imaging by the left camera 300 to acquire the image corrected by the second geometry correction unit 301.

In step S102, the stereo matching unit 400 generates the disparity image from the acquired images.

In step S103, the rail irregularity information generation unit 500 generates the rail irregularity information from the disparity image.

In step S104, the rail position is detected.

Specifically, the first rail position detection unit 510 detects the first rail position from the rail irregularity information, and the second rail position detection unit 600 performs imaging by the left camera 300, thereby detecting the second rail position from the image corrected by the second geometry correction unit 301.

In step S105, the reliability evaluation unit 700 compares the first rail position and the second rail position, and judges the reliability evaluation value of the rail position.

When the reliability evaluation value is the constant value or more, the process goes to S106, and when the reliability evaluation value is less than the constant value, the process is ended.

In step S106, the rail width is calculated.

Specifically, the rail width calculation unit 710 calculates the rail width on the basis of the first rail position or the second rail position transmitted from the reliability evaluation unit 700.

In step S107, the first rail distance is calculated.

Specifically, the first rail distance calculation unit 720 calculates the first rail distance on the basis of the rail width.

In step S108, the second rail distance is calculated.

Specifically, the second rail distance calculation unit 810 calculates the second rail distance on the basis of the output of the distance calculation unit 410.

In step S109, the distance error is calculated.

Specifically, the distance error calculation unit 730 compares the first rail distance with the second rail distance to calculate the distance error.

In step S110, the correction amount is calculated.

Specifically, the correction amount calculation unit 740 calculates the distance correction value on the basis of the distance error information calculated by the distance error calculation unit 730.

In step S111, the distance calculation unit 410 corrects the distance measurement result on the basis of the calculated distance correction value.

The distance measurement system 100 according to the first embodiment has been described above.

The distance measurement system 100 of the present disclosure mainly has the first rail distance calculation unit 720, and the second rail distance calculation unit 810. The distance measurement system 100 can accurately calculate the distance error by comparing the first rail distance calculated on the basis of the rail position based on the irregularity information calculated from the disparity and the rail width that is previously accurately defined by the standards, with the second rail distance calculated on the basis of the disparity image, and can accurately correct the distance measurement of the distance measurement system 100 by calculating the correction amount on the basis of the distance error concerned.

### Second Embodiment

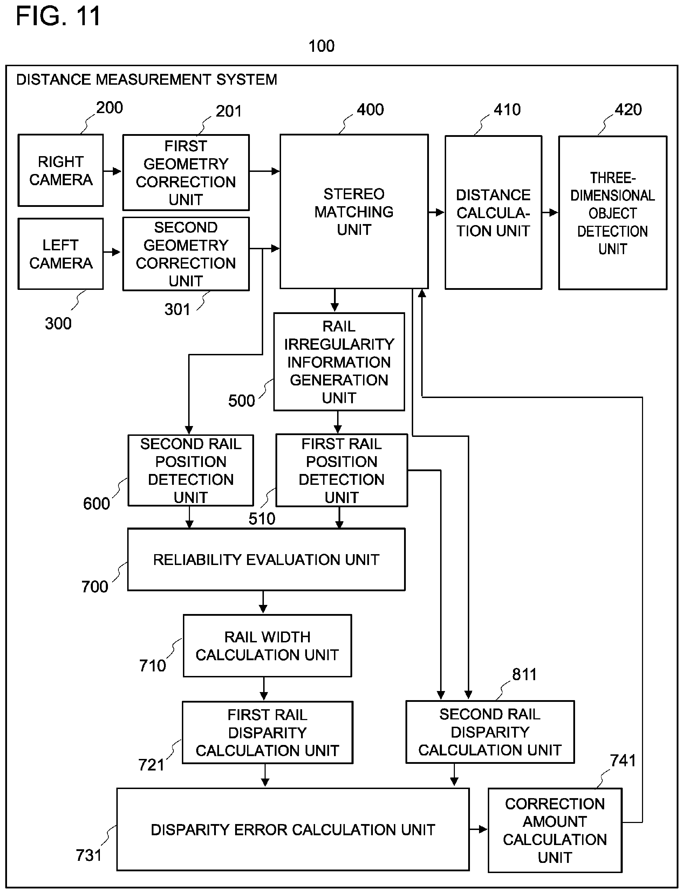

Next, the distance measurement system 100 of a second embodiment will be described with reference to Fig. 11.

Fig. 11 is an outline diagram illustrating the distance measurement system 100 according to the second embodiment.

In the distance measurement system 100 according to the first embodiment, the difference between the first rail distance and the second rail distance is handled as the distance error of the distance measurement system 100, but the distance measurement system 100 according to the second embodiment is different from the first embodiment in that the difference between the first rail distance and the second rail distance is handled as the disparity error of the distance measurement system 100.

In addition, the distance measurement system 100 includes the right camera 200, the left camera 300, the first geometry correction unit 201, the second geometry correction unit 301, the stereo matching unit 400, the distance calculation unit 410, the three-dimensional object detection unit 420, the rail irregularity information generation unit 500, the first rail position detection unit 510, the second rail position detection unit 600, the reliability evaluation unit 700, the rail width calculation unit 710, a first rail disparity calculation unit 721, a disparity error calculation unit 731, a correction amount calculation unit 741, and a second rail disparity calculation unit 811.

### (Configuration example)

The first rail disparity calculation unit 721 calculates the targeted rail disparity on the basis of the rail width information transmitted from the rail width calculation unit 710. At this time, the calculated rail disparity is a first rail disparity.

Specifically, the first rail disparity calculation unit 721 calculates the first rail disparity according to equation (2) and equation (3) below, and transmits the first rail disparity to the disparity error calculation unit 731.

Here, Rd is the first rail disparity, B is the base line length of the stereo camera, fc is the focal length, Zb is the first rail distance, Rₚ is the pixel pitch, R_{w} is the rail width, and Rₚ is the number of pixels of the rail width on the image. $Rd = B \times fc / \left(Zb\times {P}_{p}\right)$ $Zb = fc \times {R}_{W} / {R}_{P}$

The second rail disparity calculation unit 811 calculates the rail disparity corresponding to the rail distance from the distance measurement system 100 to the rail by using the disparity information.

Specifically, the second rail disparity calculation unit 811 decides the targeted area from the distance image generated by the distance calculation unit 410, and calculates the distance of the rail of the targeted area. At this time, the calculated rail disparity is a second rail disparity.

In addition, like the second rail distance calculation unit 810, the targeted area is acquired from the first rail position detection unit 510.

The disparity error calculation unit 731 calculates the disparity error of the second rail disparity calculation unit 811.

Specifically, the distance error calculation unit 730 calculates, as the disparity error, the difference between the first rail disparity and the second rail disparity.

The correction amount calculation unit 741 calculates the correction amount of the disparity of the stereo matching unit 400 on the basis of the detection error. The calculated correction amount is transmitted to the stereo matching unit 400.

The stereo matching unit 400 creates the distance image in which the disparity value is corrected on the basis of the transmitted correction amount.

The distance measurement system 100 according to the second embodiment has been described above.

The distance measurement system 100 of the present disclosure mainly has the first rail disparity calculation unit 721, and the second rail disparity calculation unit 811. The distance measurement system 100 can calculate the detection error of the disparity by comparing the first rail disparity calculated on the basis of the rail width defined by the standards with the second rail disparity calculated on the basis of the disparity image, and can correct the disparity of the distance measurement system 100 by calculating the correction amount on the basis of the detection error concerned.

The embodiments of the present invention have been described above, but the present invention is not limited to the above embodiments, and various modifications can be made in the scope not departing from the purport of the present invention.

In addition, the present invention can also take the following modes.

### (Mode 1)

A distance measurement system includes rail information acquirement units that acquire rail information from a plurality of directions, and a distance calculation unit that performs distance calculation by stereo matching. The distance measurement system includes: a rail irregularity information generation unit that detects the irregularity of a rail and around the rail; a first rail position detection unit that outputs a rail position on the basis of the output of the rail irregularity information generation unit; a rail width calculation unit that outputs rail width information on the basis of the output of the first rail position detection unit; a first rail distance calculation unit that outputs a first rail distance on the basis of the rail width information; a second rail distance calculation unit that outputs a second rail distance on the basis of the output of the distance calculation unit; a distance error calculation unit that compares the first rail distance and the second rail distance to output an error; and a correction amount calculation unit that outputs the correction amount of the output of the distance calculation unit on the basis of the output of the distance error calculation unit.

### (Mode 2)

In the distance measurement system according to Mode 1, the rail information acquirement units are a stereo camera, and the rail irregularity information generation unit generates irregularity information on the basis of a disparity image generated from the image of the stereo camera.

### (Mode 3)

The distance measurement system according to Mode 1 or 2, includes a reliability evaluation unit that judges the reliability of the rail position, and a second rail position detection unit that outputs the rail position from the image outputted by one of the rail information acquirement units. The reliability evaluation unit compares a first rail position by the first rail position detection unit and a second rail position by the second rail position detection unit to calculate the reliability evaluation value of the rail position, and outputs, as the reliable rail position, at least one of the first rail position and the second rail position when the reliability evaluation value is a predetermined value or more.

### (Mode 4)

In the distance measurement system according to Mode 3, the reliability evaluation unit calculates the reliability evaluation value on the basis of at least one of the linearity or the flatness of the detected rail, the position of a vehicle that travels on the rail, weather, time, the tilting of the sun, the detection distance of the rail, and the disparity value or the effective disparity rate of the rail and around the rail.

### (Mode 5)

In the distance measurement system according to Mode 3 or 4, the first rail position detection unit detects the edge position of the inside of the rail and the edge position of the outside of the rail, and outputs, as the rail position, the position of the center between the edge position of the inside of the rail and the edge position of the outside of the rail, and the rail width calculation unit outputs the rail width information on the basis of the information of the rail position and the standardized rail width.

### (Mode 6)

In the distance measurement system according to any one of Modes 2 to 5, the rail irregularity information generation unit outputs a road surface disparity from the disparity image, and normalizes the disparity value of each pixel of the disparity image by the road surface disparity of each row to linearly approximate the normalized the disparity value.

### (Mode 7)

In the distance measurement system according to any one of Modes 3 to 6, the rail width calculation unit sets a weight to at least one of the rail position by the first rail position detection unit and the rail position by the second rail position detection unit, which are outputted by the reliability evaluation unit, thereby performing the calculation of the rail width on the basis of the rail position having high reliability.

### (Mode 8)

The distance measurement system according to any one of Modes 3 to 7, includes the second rail distance calculation unit that calculates the distance from the rail information acquirement unit to the rail by using the rail information. The second rail distance calculation unit corrects a distance Zb acquired from the distance calculation unit to Zb' calculated on the basis of equation (1) below: $Zb ′ = Zb / H ⋅ \left(H-h\right)$ in which it should be noted that the H is the camera height of the road surface reference, the h is the rail height, and the Zb' is the rail distance in which the Zb is corrected.

### (Mode 9)

The distance measurement system according to any one of Modes 3 to 8, includes a storage unit that stores the data included in the rail information acquirement unit, the distance calculation unit, the rail irregularity information generation unit, the first rail position detection unit, the reliability evaluation unit, the rail width calculation unit, the first rail distance calculation unit, the second rail distance calculation unit, the distance error calculation unit, and the correction amount calculation unit, in association with at least one different data. The data in the storage unit is transmittable to the outside.

### (Mode 10)

The distance measurement system according to any one of Modes 3 to 9, includes a communication unit that can transmit and receive to/from the outside, the data included in the distance calculation unit, the rail irregularity information generation unit, the first rail position detection unit, the reliability evaluation unit, the rail width calculation unit, the first rail distance calculation unit, the second rail distance calculation unit, the distance error calculation unit, and the correction amount calculation unit. The distance measurement can be performed on the basis of the result obtained by performing the information process in the outside.

### (Mode 11)

In the distance measurement system according to any one of Modes 1 to 10, the first rail distance calculation unit is a first rail disparity calculation unit that calculates the disparity corresponding to the distance to the rail on the basis of the rail width information, the distance error calculation unit is a disparity error calculation unit that compares the output of the disparity of the first rail disparity calculation unit and the output of the disparity obtained from a stereo matching unit to output a disparity error, and the correction amount calculation unit calculates a correction amount that corrects the disparity information of the stereo matching unit from the disparity error.

### (Mode 12)

A vehicle that is equipped with the distance measurement system according to any one of Modes 1 to 11.

### (Mode 13)

A distance measurement method in a distance measurement system including rail information acquirement units that acquire rail information from a plurality of directions, and a distance calculation unit that performs distance calculation by stereo matching, includes the steps of: acquiring rail irregularity information detecting the irregularity of a rail and around the rail by the rail information acquirement units; detecting a first rail position on the basis of the rail irregularity information; calculating a rail width on the basis of the first rail position; outputting a first rail distance on the basis of the rail width; calculating a second rail distance on the basis of the output of the distance calculation unit; comparing the first rail distance and the second rail distance to calculate an error; and correcting the output of the distance calculation unit on the basis of the error.

### (Mode 14)

In the distance measurement method according to Mode 13, the rail information acquirement units are a stereo camera, and the irregularity information is generated on the basis of a disparity image generated from the image of the stereo camera.

### (Mode 15)

In the distance measurement method according to Mode 13 or 14, the distance measurement system includes a reliability evaluation unit that calculates a reliability evaluation value that judges the reliability of a rail position, and a second rail position detection unit that outputs the rail position from the image outputted by one of the rail information acquirement units, the reliability evaluation unit compares the first rail position and a second rail position to calculate the reliability evaluation value of the rail position, and the reliability evaluation unit outputs, as the reliable rail position, at least one of the first rail position and the second rail position when the reliability evaluation value is a predetermined value or more.

### List of Reference Signs

- 10: system controller
- 100: distance measurement system
- 200: right camera
- 300: left camera
- 201: first geometry correction unit
- 301: second geometry correction unit
- 400: stereo matching unit
- 410: distance calculation unit
- 420: three-dimensional object detection unit
- 500: rail irregularity information generation unit
- 510: first rail position detection unit
- 600: second rail position detection unit
- 700: reliability evaluation unit
- 710: rail width calculation unit
- 720: first rail distance calculation unit
- 721: first rail disparity calculation unit
- 810: second rail distance calculation unit
- 811: second rail disparity calculation unit
- 730: distance error calculation unit
- 731: disparity error calculation unit
- 740, 741: correction amount calculation unit
- 910: rail
- 920: road surface

## Claims

1. A distance measurement system that includes rail information acquirement units that acquire rail information from a plurality of directions, and a distance calculation unit that performs distance calculation by stereo matching, the distance measurement system comprising:
a rail irregularity information generation unit that detects the irregularity of a rail and around the rail;
a first rail position detection unit that outputs a rail position on the basis of the output of the rail irregularity information generation unit;
a rail width calculation unit that outputs rail width information on the basis of the output of the first rail position detection unit;
a first rail distance calculation unit that outputs a first rail distance on the basis of the rail width information;
a second rail distance calculation unit that outputs a second rail distance on the basis of the output of the distance calculation unit;
a distance error calculation unit that compares the first rail distance and the second rail distance to output an error; and
a correction amount calculation unit that outputs the correction amount of the output of the distance calculation unit on the basis of the output of the distance error calculation unit.

2. The distance measurement system according to claim 1,
wherein the rail information acquirement units are a stereo camera, and
wherein the rail irregularity information generation unit generates irregularity information on the basis of a disparity image generated from the image of the stereo camera.

3. The distance measurement system according to claim 1, further comprising
a reliability evaluation unit that judges the reliability of the rail position, and a second rail position detection unit that outputs the rail position from the image outputted by one of the rail information acquirement units,
wherein the reliability evaluation unit compares a first rail position by the first rail position detection unit and a second rail position by the second rail position detection unit to calculate the reliability evaluation value of the rail position, and outputs, as the reliable rail position, at least one of the first rail position and the second rail position when the reliability evaluation value is a predetermined value or more.

4. The distance measurement system according to claim 3,
wherein the reliability evaluation unit calculates the reliability evaluation value on the basis of at least one of the linearity or the flatness of the detected rail, the position of a vehicle that travels on the rail, weather, time, the tilting of the sun, the detection distance of the rail, and the disparity value or the effective disparity rate of the rail and around the rail.

5. The distance measurement system according to claim 3,
wherein the first rail position detection unit detects the edge position of the inside of the rail and the edge position of the outside of the rail, and outputs, as the rail position, the position of the center between the edge position of the inside of the rail and the edge position of the outside of the rail, and
wherein the rail width calculation unit outputs the rail width information on the basis of the information of the rail position and the standardized rail width.

6. The distance measurement system according to claim 2,
wherein the rail irregularity information generation unit outputs a road surface disparity from the disparity image, and normalizes the disparity value of each pixel of the disparity image by the road surface disparity of each row to linearly approximate the normalized the disparity value.

7. The distance measurement system according to claim 3,
wherein the rail width calculation unit sets a weight to at least one of the rail position by the first rail position detection unit and the rail position by the second rail position detection unit, which are outputted by the reliability evaluation unit, thereby performing the calculation of the rail width on the basis of the rail position having high reliability.

8. The distance measurement system according to claim 3, comprising
the second rail distance calculation unit that calculates the distance from the rail information acquirement unit to the rail by using the rail information,
wherein the second rail distance calculation unit corrects a distance Zb acquired from the distance calculation unit to Zb' calculated on the basis of equation (1) below: $Zb ′ = Zb / H ⋅ \left(H-h\right)$
in which it should be noted that the H is the camera height of the road surface reference, the h is the rail height, and the Zb' is the rail distance in which the Zb is corrected.

9. The distance measurement system according to claim 3, comprising
a storage unit that stores the data included in the rail information acquirement unit, the distance calculation unit, the rail irregularity information generation unit, the first rail position detection unit, the reliability evaluation unit, the rail width calculation unit, the first rail distance calculation unit, the second rail distance calculation unit, the distance error calculation unit, and the correction amount calculation unit, in association with at least one different data,
wherein the data in the storage unit is transmittable to the outside.

10. The distance measurement system according to claim 3, comprising
a communication unit that can transmit and receive to/from the outside, the data included in the distance calculation unit, the rail irregularity information generation unit, the first rail position detection unit, the reliability evaluation unit, the rail width calculation unit, the first rail distance calculation unit, the second rail distance calculation unit, the distance error calculation unit, and the correction amount calculation unit,
wherein the distance measurement can be performed on the basis of the result obtained by performing the information process in the outside.

11. The distance measurement system according to claim 1,
wherein the first rail distance calculation unit is a first rail disparity calculation unit that calculates the disparity corresponding to the distance to the rail on the basis of the rail width information,
wherein the distance error calculation unit is a disparity error calculation unit that compares the output of the disparity of the first rail disparity calculation unit and the output of the disparity obtained from a stereo matching unit to output a disparity error, and
wherein the correction amount calculation unit calculates a correction amount that corrects the disparity information of the stereo matching unit from the disparity error.

12. A vehicle that is equipped with the distance measurement system according to any one of claims 1 to 11.

13. A distance measurement method in a distance measurement system that includes rail information acquirement units that acquire rail information from a plurality of directions, and a distance calculation unit that performs distance calculation by stereo matching, the method comprising:
acquiring rail irregularity information detecting the irregularity of a rail and around the rail by the rail information acquirement units;
detecting a first rail position on the basis of the rail irregularity information;
calculating a rail width on the basis of the first rail position;
outputting a first rail distance on the basis of the rail width;
calculating a second rail distance on the basis of the output of the distance calculation unit;
comparing the first rail distance and the second rail distance to calculate an error; and
correcting the output of the distance calculation unit on the basis of the error.

14. The distance measurement method according to claim 13,
wherein the rail information acquirement units are a stereo camera, and
wherein the irregularity information is generated on the basis of a disparity image generated from the image of the stereo camera.

15. The distance measurement method according to claim 13,
wherein the distance measurement system includes a reliability evaluation unit that calculates a reliability evaluation value that judges the reliability of a rail position, and a second rail position detection unit that outputs the rail position from the image outputted by one of the rail information acquirement units,
wherein the reliability evaluation unit compares the first rail position and a second rail position to calculate the reliability evaluation value of the rail position, and
wherein the reliability evaluation unit outputs, as the reliable rail position, at least one of the first rail position and the second rail position when the reliability evaluation value is a predetermined value or more.
